# EUROPEAN PATENT APPLICATION

(11) **EP 1 209 583 A2**
(43) Date of publication of application: **29.05.2002**
(21) Application number: 01123331.9
(22) Date of filing: 08.10.2001
(51) Int. Cl.: G06F 17/30

(54) **Method and device for searching for information on a data communications network**

(30) Priority: 19.10.2000 IT MI002265
(71) Applicant: Gruppo Euromedia S.R.L., 20159 Milano (IT)
(72) Inventor: Palazzolo, Vincenzo, 20151 Milano (IT)
(74) Representative: Modiano, Guido, Dr.-Ing.

(57) **Abstract**

A device for searching for information on a data communications network, comprising:
means for displaying a plurality of windows (1), each window (1) being suitable to display the Web page of a corresponding search engine (2);
means for selecting a plurality of search engines (2), suitable to allow the selection of the search engines (2) and their display in the windows (1);
each window displaying simultaneously online a corresponding search engine (2) in order to perform an information search in parallel on each of the search engines (2), with simultaneous display of the results of the search online in a single Web page.

## Description

The present invention relates to a method and a device for searching for information on a data communications network. More particularly, the invention relates to a method and a device for searching for Web pages on a data communications network such as the Internet.

It is known that the enormous growth of the Internet in recent years has led to an exponential increase in the number of Web pages available online.

One of the greatest difficulties encountered by a user of the data communications network when he wishes to "navigate" through the pages of the network, without knowing the specific address of the site he is interested in, consists in rapidly reaching a Web page that contains the information he is searching for.

For this purpose, since it is obviously impossible to search for the wanted page by means of attempts to input possible addresses, so-called search engines are currently known which allow the user, after he has input one or more keywords, to search within the data communications network.

Substantially, search engines are therefore the main resource available to the user for finding information on the Internet and currently are the sites whose address is most visited by users.

However, all the various individual search engines, no matter how reliable and up-to-date with their archive, are unable to classify by themselves the entire data communications network.

For each page of the network that is scanned, search engines store parts of the text contained therein, so that every user search is presented with a list of the pages of the network that contain the words in which the user is interested.

The use of search engines is very simple, since it is merely a matter of entering the words related to the requested subject and in a few seconds one obtains a list of pages of the network that contain said words.

Although on the one hand the manner in which the keywords are input is decisive, on the other hand it is evident that the pages of the network that match said keywords also include documents which are not pertinent to the interests of the user. Regardless of the system used to catalog the information, all search engines are constituted by large databases that the users of the network query in order to find the sites they are interested in. In order to determine which documents must be returned in response to a given search, each engine uses a specific "rating" algorithm, i.e., a specific set of criteria that rule the sorting of the contents in the index. Search engines periodically modify their rating algorithms according to their interest.

There are several selection criteria for each engine: some privilege factors such as checking so-called links, while others privilege sites that can afford to buy their own popularity, i.e., visibility on the network. All this of course entails the fact that the search engine does not search for network pages of sites that are not rated by its algorithm.

Essentially, therefore, when a user performs a search through a search engine, he can never be certain that he has found all the documents that are actually present on the network and most of all that he has found the documents of greatest interest for the keywords entered by the user.

This entails the need to conduct the search by using a plurality of search engines, so as to be substantially certain of using all possible search algorithms (belonging to the various engines) and therefore of examining the largest possible number of network pages.

Clearly, this kind of search is extremely time-consuming; accordingly, the user usually restricts himself to performing a search by using two or at the most three search engines and therefore the search often has a negative result although the information that the user is requesting is actually present on the Internet.

The aim of the present invention is to provide a method and a device for searching for information on a data communications network which allow to perform a search which is as exhaustive as possible and to do so very rapidly.

Within this aim, an object of the present invention is to provide a method and a device for searching for information on a data communications network which allow to perform an extremely exhaustive search substantially in the same time required by a single current search engine to perform its own search.

Another object of the present invention is to provide a method and a device for searching for information on a data communications network which allow to display the result of the search in a single screen page.

Another object of the present invention is to provide a method and a device for searching for information on a data communications network which allow to directly access every single network page listed among the pages found during the search and displayed on the screen page.

Another object of the present invention is to provide a method and a device for searching for information on a data communications network which allow to make a search on the network extremely simple even for newcomers to the data communications network.

Another object of the present invention is to provide a method and a device for searching for information on a data communications network which are highly reliable, relatively simple to provide and at competitive costs.

This aim and these and other objects will become better apparent hereinafter are achieved by a device for searching for information on a data communications network, characterized in that it comprises:
means for displaying a plurality of windows, each one of said windows being suitable to display the Web page of a corresponding search engine;
means for selecting a plurality of search engines, suitable to allow the selection of said search engines and their display in said windows;
each of said windows displaying simultaneously online a corresponding search engine in order to perform an information search in parallel on each of said search engines, with simultaneous display of the results of said search online in a single Web page.

Further characteristics and advantages of the invention will become better apparent from the description of a preferred but not exclusive embodiment of the method and the device according to the present invention, illustrated only by way of non-limitative example in the accompanying drawings, wherein:

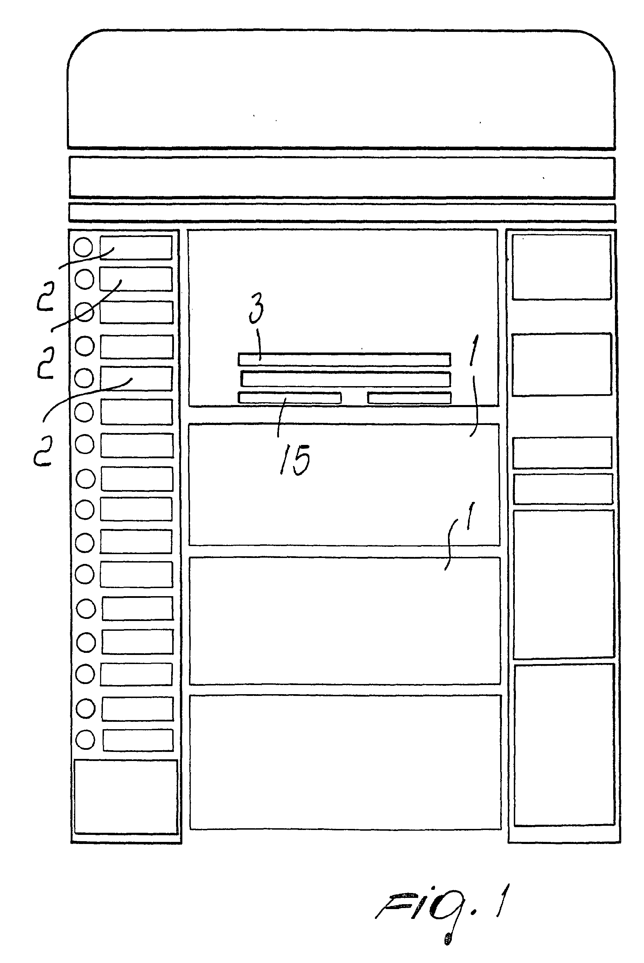

Figure 1 is a schematic view of a presentation screen of the device according to the present invention; and

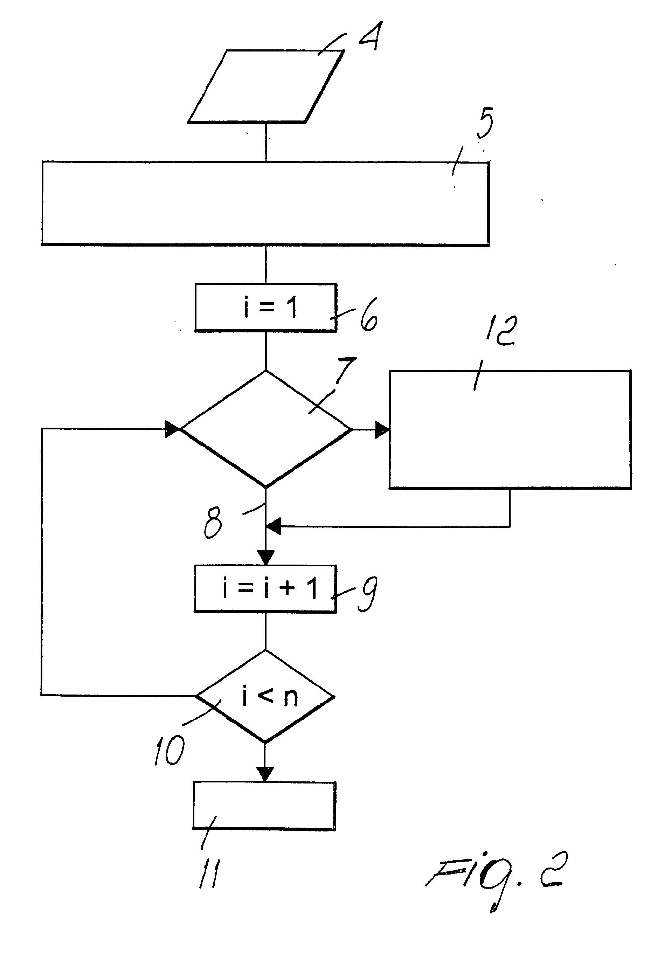

Figure 2 is a flowchart of the method for activating the individual search engines.

With reference to the above figures, the method and the device for searching for information on a data communications network according to the present invention comprise means for displaying online, on a single page, a plurality of windows 1, each relevant to one of the search engines commonly used by network users.

Essentially, the device according to the invention has means which is suitable to display, one after the other, multiple windows 1 related to the addresses of the individual search engines.

The number of windows that can be displayed on the individual page corresponds to the number of search engines that the user has activated.

The device according to the present invention furthermore comprises means for selecting a plurality of search engines 2 so as to allow to subsequently open their corresponding pages 1 within the page to which the user connects online.

The device according to the invention furthermore has means 3 for entering a string that user wishes to search for among the information that is present on the network by using the multiple search engines 2, whose windows 1 are displayed simultaneously on the Web page to which the user is connected online.

The device furthermore has, in addition to the possibility of conducting a global search by searching for the same string of characters with each one of the multiple search engines among the information available on the network, additional services, such as for example weather forecasts, real-time stock-exchange information, and the like.

The particularity of the invention therefore consists of the fact that the user has available a device which allows him to perform a global search by entering, through the means 3, a string of characters that he wishes to search for, and to use simultaneously the searches performed by multiple search engines in parallel and online, with the additional possibility to display simultaneously the Web pages of the corresponding search engines, thus being able to have, on a same page, the list of all the Web pages found by each search engine.

In each window 1, the device according to the invention allows to perform all the operations that would in any case be executable if the user directly entered the address of the page of that given search engine 2.

The device according to the invention furthermore allows, when the user clicks on a Web page listed in the window 1 related to a given search engine, to automatically enlarge the page full-screen, so that the search of that given search engine stands out in large format for the user, while maintaining underneath all the remaining windows 1 open for the respective search engine 2.

The method according to the invention allows, after the user has entered, through the means 3 for entering the string to be searched for, a string 4 to be searched for online, a normalization step 5, i.e., a step for checking the validity of the string, for adapting the string to the various search engines 2, and optionally for eliminating strings whose content is deemed illegal.

An index related to the search engines 2 is then initialized to 1 and step 7 checks whether the i-th engine, where i ranges from 1 to n, where n is the maximum number of search engines that can be queried, is selected or not. If the search engine is not selected, step 8, the method moves on to step 9, in which the index i is incremented by 1, and then to step 10, which checks whether the value of the index i is lower than n, i.e., than the total number of search engines 2 that can be queried by the user.

If the index i is smaller than n, the method returns to step 7, which checks whether the engine having the index i is selected; if it is, the method moves on to step 12, which composes the address that activates the search for the string entered by the user for the chosen search engine.

At this point, the address is assigned to the window 1 related to the given search engine i.

Then the method moves on from step 12 to step 9.

In this manner, the method scans all the search engines 2 selected by the user, so as to search for the string 4 in all the search engines, thus displaying simultaneously the result of the searches in the online page that the user has opened, each window 1 displaying a corresponding search engine 2 and therefore the corresponding search that has been conducted.

The device according to the invention is furthermore provided with means 15 for sending messages, such as short text messages.

In practice it has been found that the device and the method according to the invention allow to greatly simplify the search operation that can be performed by the user on a data communications network, since the user can perform the same search simultaneously on multiple search engines and display its results simultaneously online and in a browsable manner in a corresponding number of windows arranged in series on a same Web page.

The device and the method thus conceived are susceptible of numerous modifications and variations, all of which are within the scope of the inventive concept; all the details may furthermore be replaced with other technically equivalent elements.

The disclosures in Italian Patent Application No. MI2000A002265 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for searching for information on a data communications network, **characterized in that** it comprises:
means for displaying a plurality of windows, each one of said windows being suitable to display the Web page of a corresponding search engine;
means for selecting a plurality of search engines, suitable to allow the selection of said search engines and their display in said windows;
each of said windows displaying simultaneously online a corresponding search engine in order to perform an information search in parallel on each of said search engines, with simultaneous display of the results of said search online in a single Web page.

2. The device according to claim 1, **characterized in that** it comprises means for entering at least one string which is suitable to be searched for in said data communications network by means of one or more of said multiple search engines.

3. The device according to claim 1, **characterized in that** it comprises means for sending messages.

4. The device according to one or more of the preceding claims, **characterized in that** each one of said windows can be enlarged full-screen for the full-screen display of the search results of said string by means of the search engine related to said window.

5. The device according to one or more of the preceding claims, **characterized in that** said windows can be displayed in a scrolling fashion on said Web page on which they are displayed.

6. A method for searching for information on a data communications network, **characterized in that** it comprises the steps that consist in:
entering a string to be searched on said network;
scanning multiple search engines in order to make each one of said multiple search engines search for said string;
displaying, on a single Web page, within multiple windows, each dedicated to an individual search engine, the results of said search conducted by each one of said search engines, said results being displayed online.

7. The method according to claim 6, **characterized in that** said step that consists in entering said string to be searched is followed by a step for normalizing said string, said normalization step comprising the steps that consist in checking the validity of said string and adapting said string to each one of said search engines.

8. The method according to claim 6, **characterized in that** said step that consists in performing said search by virtue of said plurality of search engines comprises a step that consists in checking whether each one of said search engines has been selected or not by the user.

9. The method according to claim 8, **characterized in that** in the case in which said search engine is selected by the user, the address of said search engine is composed to activate the search of said string and said address is assigned to a respective window to display the results of said search.

10. The method according to claim 6, **characterized in that** said display windows of said search engines are movable with a scrolling motion inside said Web page.
